# EUROPEAN PATENT APPLICATION

(11) **EP 1 209 913 A2**
(43) Date of publication of application: **29.05.2002**
(21) Application number: 01127366.1
(22) Date of filing: 21.11.2001
(51) Int. Cl.: H04N 7/16

(54) **Providing simulated broadcast services over a limited bandwidth channel**

(30) Priority: 28.11.2000 US 723532
(71) Applicant: AT&T Corp., New York, NY 10013-2412 (US)
(72) Inventor: Basso, Andrea, Ocean, New Jersey 07712 (US); Jackel, Lawrence David, Holmdel, New Jersey 07733 (US); Kim, Byounh-Jo J., Atlantic Highlands, New Jersey 07701 (US); Woodward, Sheryl Leigh, Holmdel, New Jersey 07733 (US)
(74) Representative: Modiano, Guido, Dr.-Ing.

(57) **Abstract**

A system and method is provided for simulating broadcast services over a cable television system by transmitting one or more programs, such as video, to a user in response to the user requesting the programs. A physical-layer channel is dynamically allocated to the user and each requested program is transmitted to the user on the allocated physical-layer channel. Therefore, channel selection is performed at a primary hub, rather than at a user's premises. Additionally, user-profile information can be stored in a primary hub, and one or more programs related to the stored user-profile information are automatically transmitted to the user without necessarily requiring the user to request the programs.

## Description

### TECHNICAL FIELD OF THE INVENTION

The present invention generally relates to providing broadcast services and broadband, multimedia services to users. More particularly, the present invention relates to providing multiple programs requested by users via a distribution system.

### BACKGROUND OF THE INVENTION

Currently, cable television (CATV) users receive television broadcast services (e.g., television programs broadcasted from ABC, NBC, HBO and the like) via a CATV distribution plant. Conventionally, each physical-layer channel (i.e., a channel in a downstream bandwidth of a distribution system, such as a radio frequency (RF)-channel in coaxial cable, a digital subscriber line (DSL) channel, wavelength in fiber, and the like) is dedicated for transmitting television programs from a particular broadcaster. A distribution system is not limited to a distribution system for a CATV system, such as a CATV distribution plant, and may include a distribution system for any known system providing broadcast and/or broadcast services, such as a satellite distribution system. Therefore, even if programs transmitted on a physical-layer channel dedicated to a broadcaster are not likely to be viewed by a user, other broadcasters and broadband service providers are prevented from using the dedicated channel. Downstream bandwidth on a conventional CATV distribution plant is limited, especially given the growing popularity of broadband services (e.g., video-on-demand (VOD), Internet service, and the like) that are provided in conjunction with broadcast services using the same CATV system. Therefore, a need exists to efficiently manage and utilize downstream bandwidth on a CATV distribution plant for providing broadcast and broadband services simultaneously.

Conventional CATV systems include physical-layer channels dedicated to a broadcaster, and the number of physical-layer channels is generally limited. Currently, a large number of broadcasters are available that provide programming related to a variety of subjects and audiences. Due to limited downstream bandwidth, a cable service provider is prevented from offering broadcast services from many broadcasters. Therefore, a need exists for a broadcast service that provides programs from a large number of broadcasters without being constrained by the limited downstream bandwidth in a distribution system.

A VOD channel carries video that is requested by a user, and thus the video is generally always viewed. Therefore, VOD is an efficient alternative to using channels dedicated to broadcasters (e.g., ABC, NBC, HBO, and the like), which include video that may or may not be viewed by a user. However, VOD is generally limited to requiring a user to select a single program, such as a movie, per request. Additionally, VOD generally requires a user to select a channel carrying the requested video (e.g., a user switches the channel on a television set to the VOD channel for receiving the requested video). Also, a physical-layer channel is generally assigned for carrying VOD by a cable service provider, as opposed to being dynamically assigned at a CATV head-end.

Consequently, a service is needed that transmits programs to a user without requiring the user to select a particular channel at a user premises, and a service is needed that can dynamically or statically assign physical-layer channels to user premises equipment for efficiently utilizing downstream bandwidth in a distribution system.

### SUMMARY OF THE INVENTION

It is an aspect of the present invention to provide a system and method that utilizes downstream bandwidth in a CATV distribution plant efficiently and that allows a cable service provider to provide programs from a large number of channel providers without being constrained by the limited available downstream bandwidth in a CATV distribution plant. Channel providers include current domestic networks (e.g., NBC, ABC, CBS and FOX), local channels, cable channels, international channels (e.g., BBC), VOD providers and the like.

Consequently, a method for providing simulating broadcast services is disclosed that includes allocating a physical-layer channel for transmitting at least one program; receiving a program selection; translating the program selection to at least one program; and transmitting each program over the network on the allocated physical-layer channel. The allocated physical-layer channel can be dynamically allocated to accommodate varying conditions in a distribution system. The simulated broadcast services include selecting a plurality of programs in accordance with a program selection received from a user and retrieving the selected programs from an archive and/or a live feed. Programs related to stored user-profile information can also be retrieved and transmitted to the user without necessarily requiring the user to select a plurality of programs.

A system is provided that includes a primary hub connected to a media server, an archive and a live video feed. The system includes a distribution system that has a plurality of physical-layer channels and connects the primary hub to the plurality of user premises. The media server is operable to allocate a physical-layer channel for transmitting at least one program. The channel can be dynamically allocated based upon one or more of (1) a number of users requesting a program, (3) locations of users requesting a program and (2) channel transmission characteristics. The media server receives a request for at least one program from one of the plurality of user premises equipment and retrieves each program in response to the received request. The media server is operable to retrieve each requested program from the live feed and/or the archive for transmission on the allocated physical-layer channel to the user premises equipment. The primary hub can also store user-profile information locally or remotely (e.g., in a storage device in the primary hub or in a storage device located across a network) and retrieve at least one program related to the user-profile information for transmission on the allocated physical-layer channel without necessarily requiring a user to request a program.

The system is operable to select programs at the primary hub, rather than at user premises equipment. Therefore, programs selected by a user or related to the user's user-profile information are automatically transmitted to the user. The user receives programs that he/she is likely to watch without switching between multiple programs (not selected by or related to the user) before finding a desirable program to watch. Also, the system is operable to receive and/or store programs from a large number of broadcasters whose programming may normally not be available via a conventional CATV broadcast service due to downstream bandwidth limitations.

Other features and advantages of the present invention will become apparent with reference to the following detailed description and figures.

### BRIEF DESCRIPTION OF THE DRAWINGS

The present invention is illustrated by way of example and not limitation in the accompanying figures in which like reference numerals indicate similar elements and in which:
Fig. 1 illustrates a high-level schematic block-diagram of a system employing various principles of a preferred embodiment of the present invention;
Fig. 2 illustrates a schematic block-diagram of an exemplary CATV architecture employable in the system shown in Fig. 1;
Fig. 3 is a flow-diagram outlining an exemplary process for providing simulated broadcast services; and
Fig. 4 is a flow-diagram outlining an exemplary process for providing channel-surfing for simulated broadcast services.

### DETAILED DESCRIPTION OF THE INVENTION

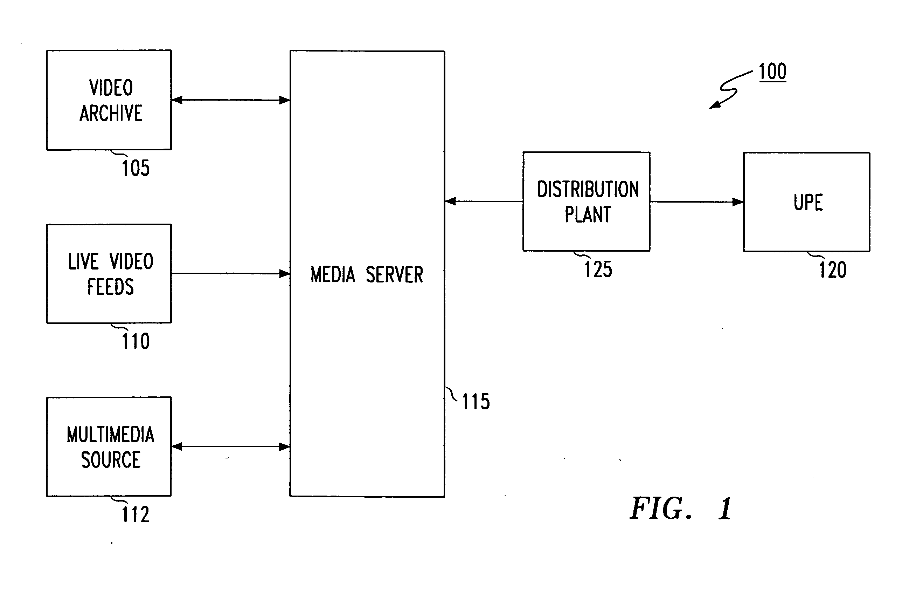

Fig. 1 is a high-level schematic block-diagram of system 100 providing broadcast services (e.g., broadcast television programs) and broadband services, including simulated broadcast services for users. System 100 includes media server 115 that receives signals from a plurality of sources, including video archive 105 providing digital video, live video feeds 110 (e.g., live feeds from traditional networks including ABC, NBC and CBS), and signals from multi-media source 112 (e.g., digital audio, data and other multi-media signals). Media server 115 can include one server or a plurality of servers that can receive signals from a plurality of sources and transmit programs downstream to one or more user premises. For example, when media server 115 includes a plurality of servers, each server is assigned a particular task, such as retrieving programs from video archive 105 or signaling and transmission to user premises equipment (UPE) 120. Multimedia source 112 can include archived media (e.g., audio, data, and the like), similar to digital video stored in video archive 112 and live feeds of media, similar to live video feeds 110. Multiple users, each using UPE 120, are connected to media server 115 via distribution plant 125. Distribution plant 125 may include one or more known architectures (e.g., all coaxial cable, hybrid fiber-coaxial cable (HFC), fiber-to-the-home (FTTH), fiber-to-the-curb (FTTC), DSL, and the like). UPE 120 may include a set-top box, personal computer, PDA, wireless devices, digital phones, DVD players, CD players and other intelligent devices.

Users utilize UPE 120 for requesting a program, such as a video program, from a channel provider. For example, a user controlling a set-top box with an input device, such as a remote control, selects a video program to view from an electronic program guide (EPG). The set-top box sends the request upstream to media server 115. Media server 115 sends the video program downstream to the set-top box on a physical-layer channel allocated to the set-top box by media server 115.

Media server 115 selects a physical layer channel for allocation to UPE 120. Media server 115 can select a physical-layer channel that is suitable for transmitting the video program. For example, a physical-layer channel is selected that minimizes latency and provides a high SNR. A physical-layer channel can be selected that maximizes the number of UPEs that share a program (e.g., based upon the users' locations and whether the users request the same program(s)).

Media server 115 can dynamically allocate a physical layer channel to UPE 120. For example, media server 115, after allocating a physical layer channel to UPE 120, can re-allocate another physical layer channel to UPE 120 when managing downstream bandwidth in distribution plant 125. For example, another physical-layer channel already assigned to a plurality of users receiving the same program(s) and/or having better transmission characteristics (e.g., high signal-to-noise ratio) can be re-allocated to UPE 120.

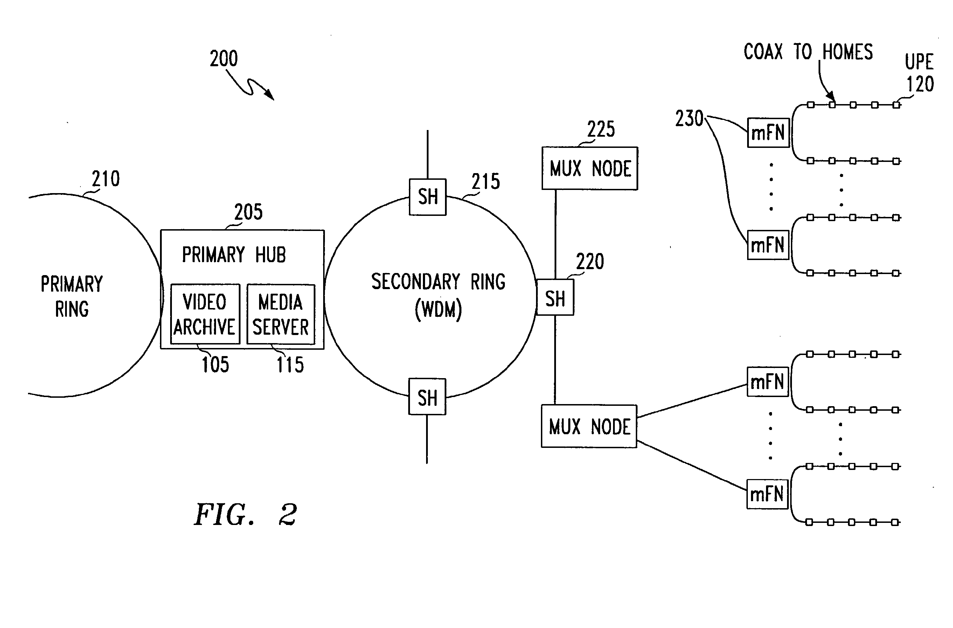

Fig. 2 is a schematic block-diagram of system 200, employing an exemplary CATV architecture that is embodied in system 100 (shown in Fig. 1). System 100, however, is not limited to the architecture shown in Fig. 2 and can use virtually any broadband access infrastructure (e.g., twisted copper pairs employing DSL, coaxial cable, HFC, FTTH, FTTC, wireless systems, and the like).

System 200 provides broadcast services and simulated broadcast services to users via a hybrid-fiber coaxial distribution plant, which brings fiber connections close to users' premises. System 200 and related systems that can employ the principles of the present invention are described in U.S. Patent Application Serial No.09/460,770, entitled Fiber/Wired Communication System, filed February 11,2000, and U.S. Patent Application Serial No.09/502,043, entitled Fiber and Wire Communication System, filed December 14, 1999, which are hereby incorporated by reference. Primary hub (PH) 205 receives signals containing programs from both satellite links (not shown) and high-speed digital fiber connection 210. PH 205 includes any known device that can receive signals containing programs and can provide broadcast (conventional and/or simulated)/broadband services to users. Programs can include live video feeds and/or stored programs transmitted to PH 205. PH 205 sends the signals containing programs throughout, for example, a metropolitan area via optical fiber 215, to secondary hubs (SHs), such as SH 220. Each SH optically amplifies and optically routes the signals containing programs to an appropriate neighborhood.

In a traditional HFC CATV architecture, a fiber node would then convert the optical signal to an electric signal and forward it via coax to homes. In system 200, a mux-node, such as mux-node 225, forwards the program signals to mini-fiber nodes (mFNs), such as an mFN 230. The optical-to-electrical conversion takes place within these mFNs, and the program signals are sent to users via a physical-layer channel (e.g., a frequency on passive coaxial cable).

PH 205 includes media server 115, providing simulated broadcasting to users. For example, a user sends a request to view a previously-aired television program. Media server 115 retrieves the requested digital video program from video archive 105, such as a database, for transmission to one or more user premises. Video archive 105 can be remotely located from PH 205. Digital video stored in video archive 105 can be in any known format (e.g., MPEG, JPEG and the like). A user can also request one or more programs received by PH 205 on a live video feed. Media server 115 retrieves the requested program(s) for transmission to the user.

PH 205 also provides broadcasting services that include transmitting live video feeds from traditional channel providers (e.g., current domestic networks and cable channels including NBC, FOX, CNN, PBS, local channels, and international channels, such as the BBC) to UPE 120.

Program signals (i.e., signals carrying video and/or other media) are carried in an analog format throughout system 200. Broadcast signals, such as the live TV feeds, are conventionally broadcast using an analog AM-VSB modulation format (i.e., the standard format received by conventional televisions sets). Digital programs, such as digital video programs retrieved from video archive 105, can be modulated using a quadrature-amplitude modulation (QAM) format. QAM, when compared to AM-VSB, is preferable because of its relatively efficient use of bandwidth and less stringent noise requirements.

Approximately 80 AM-VSB signals may be transmitted using a frequency band from 50 MHz to 550 MHz. Because of the stringent noise and linearity requirements that must be met by links carrying many channels of AM-VSB, AM-VSB signals require a dedicated fiber, carrying only one wavelength. Typically the AM-VSB signals are broadcast to the entire serving area of PH 205, which can include as many as 300,000 homes.

The QAM modulated signals are used to modulate RF channels. Three content channels (i.e., data stream destined for at least one user carrying media) channels may be time-division multiplexed on a single RF channel (e.g., each 6 MHz RF channel can carry more than three video channels). The algorithm for selecting which video channels are grouped together takes into account the destination of programs carried by the video channels. For example, video channels carrying programs destined for users in proximity with each other are grouped together on a single RF channel. Also, the algorithm may take into account other factors, such as the bit-rate requirements for programs, so as to use both wavelength and RF channels efficiently. These RF channels are subcarrier multiplexed and used to modulate a laser. The output of multiple lasers will then be wavelength-division multiplexed, and transported to a SH, such as SH 220.

PH 205 narrowcasts (i.e., sends signals to a limited number of users instead of broadcasting the signals to all the users connected to PH 205) the QAM modulated signals on optical fiber 215 to SHs supporting users requesting digital programs. PH 205 transmits QAM modulated program signals on a frequency band above the AM-VSB signals (e.g., 550-750 MHz). QAM modulated signals need not meet the stringent noise and linearity requirements required for AM-VSB modulated signals, and the QAM signals can be wavelength-division multiplexed (WDM) on a single fiber. Typically, each narrowcast fiber can carry 8 wavelengths, and each wavelength can carry approximately 100 to 200 MHz of RF channels (i.e., approximately 15 to 33 RF channels carrying program signals).

The bandwidth allocation between what is broadcast and what is narrowcast is flexible. As the demand for targeted services, such as data, telephony, and VOD increases, the number of RF channels used to narrowcast signals can be increased. Accordingly, a less number of RF channels will be available for carrying broadcast signals, and bandwidth previously available for broadcasting programs from a channel provider on a RF channel may become unavailable. However, the programs offered by the channel provider can still be made available using media server 115. As the available bandwidth for broadcast channels falls, the need for simulating broadcast services will increase.

AM-VSB is currently the dominant transmission format and is compatible with conventional TVs, and a user may need UPE operable to convert QAM to AM-VSB for viewing QAM modulated video programs.

SH 220 receives analog broadcast signals (i.e., the AM-VSB signals) and narrowcast WDM signals (i.e., the QAM signals) from PH 205 via fiber 215. SH 220 combines the broadcast signal with the appropriate narrowcast signals, and transmits the combined signal to mux node 225. Mux node 225 routes the appropriate signals to mFNs 230. An optical receiver (not shown) within each mFN converts optical signals into electrical signals for transmission to users via passive coax.

Users request video by sending signals upstream to PH 205. The upstream signals originating in the home are transmitted to mFNs usually in an RF band ranging from 5-42 MHz. For example, mFN 230 transmits requests to mux node 225. Combining subsystem 340 in mux node 225 uses optical receivers to convert upstream optical signals from mFN 230 and other mFNs to electrical signals, which are then combined and used to modulate a laser that transmits the combined signal to PH 205 via SH 220. System 200 is optimal for narrowcasting, because each of mFNs 230 services approximately 50-100 households. Therefore, when compared with traditional HFC architectures, system 200 allows a unique set of narrowcast signals to be transmitted to a smaller set of users.

Signaling between UPE 120 and media server 115 is used for, among other things, sending requests to media server 115 and for instructing UPE 120 which physical-channel is carrying requested programs. URL-like designations for channel and program selections can be used by UPE 120 to select a program. Also, URL-like designations can be used for a variety of interactive broadband services, such as a service including clicking on what you see on TV for an instant purchase. UDP/IP, TCP/IP, other IP or non-IP packets can be used for 2-way signaling.

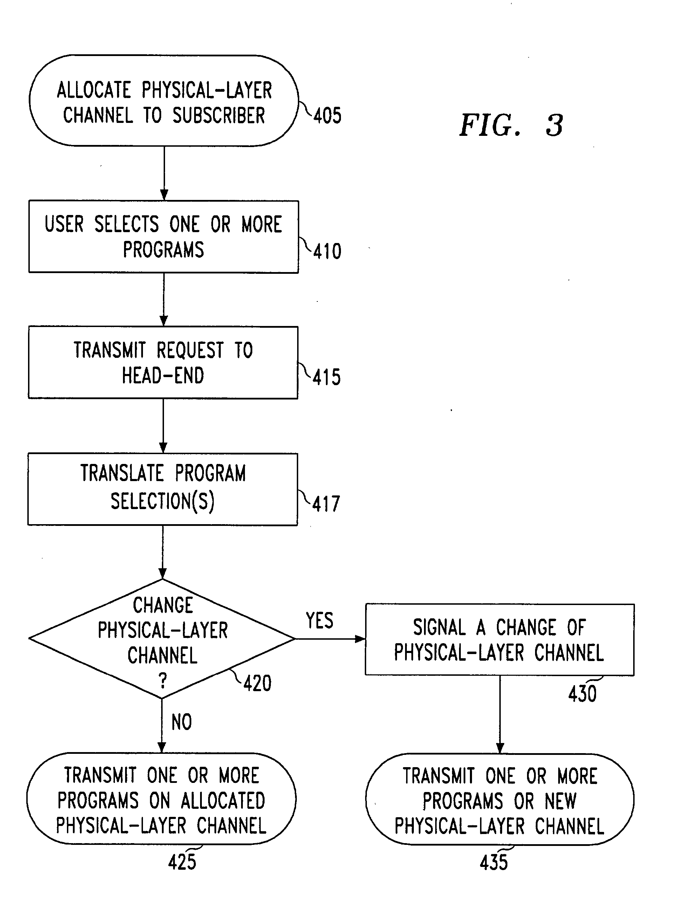

Fig. 3 illustrates a method for providing simulated broadcasting services according to a preferred embodiment of the present invention. The steps shown in Fig. 3 are described in conjunction with system 200, shown in Fig. 2. However, the method illustrated in Fig. 3 is applicable to other types of architectures and systems providing broadband services.

In step 405, media server 115 in PH 205 allocates a physical-layer channel to a user. For example, when UPE 120 at a user premises is installed, media server 115 assigns a physical-layer channel to UPE 120 for receiving programs. In step 410, a user selects one or more programs (e.g., digital video programs stored in video archive 105) to receive, and UPE 120 sends a request to media server 115 for the selected programs (step 415). The request includes the program(s) selected by the user. The user can select multiple programs with one request. Therefore, a user is not required to send one request per desired program. For example, UPE 120 can provide an EPG that allows the user to select multiple programs with one request. The request for multiple programs is then sent to media server 115.

In step 417, media server 115 receives the request and translates the program selection(s). For example, program(s) selected by the user are retrieved by media server 115 from video archive 105, multimedia source 112, and/or from live video feeds 110.

In step 420, media server 115 may dynamically allocate a physical-layer channel to UPE 120. For example, media server 115 selects another physical-layer channel already assigned to a plurality of users receiving the same program(s) and/or having better transmission characteristics (e.g., high signal-to-noise ratio). Media server 115 sends a message to UPE 120 identifying the new physical-layer channel (step 430) and transmits the selected program(s) to UPE 120 on the new physical-layer channel (step 435). Alternatively, in step 425, the requested program(s) are transmitted to UPE 120 on the physical-layer channel previously assigned to UPE 120 in step 405.

Traditionally, broadcasters providing conventional broadcast services are assigned to a channel that is generally not changed. Using the method shown in Fig. 3, programs can be broadcast on dynamically allocated physical-layer channels. Therefore, physical-layer channels having better transmission characteristics and/or carrying programs selected by multiple users can be utilized. Additionally, physical-layer channels assigned to a user generally carry programs that are viewed by the user, because since the programs are provided according to preference, profile, and requests. Therefore, bandwidth is not wasted by transmitting programs that may not be viewed by a user, such as with traditional broadcast services that dedicate a channel to a broadcaster.

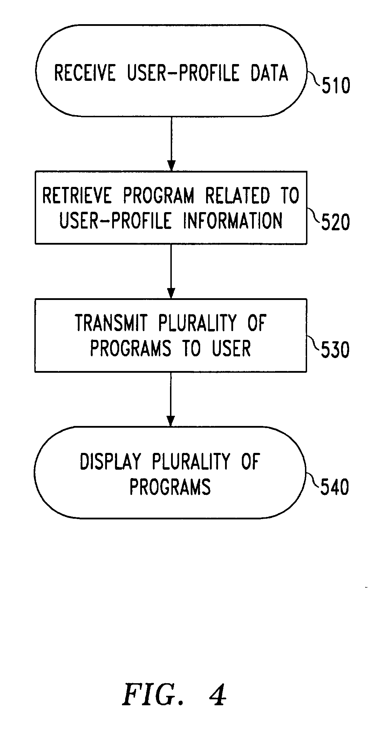

In another preferred embodiment, user-profile information is used by PH 205 to select one or more programs to transmit to UPE on a physical-layer channel. Fig. 4 illustrates a method for providing simulated broadcasting services based on user-profile information. The steps shown in Fig. 4 are described in conjunction with system 200, shown in Fig. 2. However, the method illustrated in Fig. 4 is applicable to other types of architectures and systems providing broadband services.

In step 510, PH 205 receives user-profile information from a user that includes, for example, a list of favorite channel providers, favorite programs, favorite program types, previously requested programs, and the like. User-profile information may also include personal information about the user (e.g., age, sex, hobbies, and the like). UPE 120 at the user's premises can receive user-profile information input by the user and/or store user-profile information for transmission to media server 115. PH 205 can store collected user-profile information, received from UPE 120, in a database, not shown.

In step 520, media server 115 retrieves a plurality of programs that are related to user-profile information for the user from programs stored in video archive 105 and/or from live video feeds. For example, media server 115 retrieves video programs from video archive 105 that correspond to one or more favorite types (e.g., sports, comedy, and the like) of television programs and/or that correspond to one or more favorite channel providers. Media server 115 can also retrieve programs that correspond to personal information included with the user-profile information. For example, media server 115 can retrieve gardening shows from video archive 105 and live video feeds, when gardening is included as a hobby in user-profile information. When user-profile information includes a list of favorite programs, media server 115 can retrieve the programs on the list for transmission to the user.

In step 530, the video programs retrieved in step 520 are transmitted to UPE 120 on an allocated physical-layer channel. The physical-layer channel may be allocated to the user by media server 115 according to the method shown in Fig. 4. When media server 115 receives requested programs from a live video feed, the requested programs can be transmitted to UPE 120 be media server 115 as the requested programs are received from the live video feed. Alternatively, requested programs received from the live video feed can be stored, for example, in video archive 105 and subsequently transmitted to UPE 120.

In step 540, UPE 120 at the user's premises receives the requested programs from media server 115 and displays the received programs to the user. Media server 115 can transmit each requested program to UPE 120 as each requested program is desired to be viewed by the user. For example, a user can control UPE 120 with an input device, such as a remote control, for selecting a requested program. UPE 120 sends a signal to media server 115 that instructs media server 115 to transmit the selected program to UPE 120. The received program is then displayed to the user. Alternatively, media server 115 transmits multiple requested programs to UPE 120, and UPE 120 stores the requested programs. A user selects a stored program, for example, using an input device, such as a remote control. Then, UPE 120 displays the selected program.

UPE 120 can include an EPG for selecting and displaying requested programs. For example, UPE 120 includes a set-top box providing an EPG having multiple windows for displaying multiple requested programs simultaneously. A user selects a window with an input device, such as a remote control, and the set-top box sends a signal to media server 115 that instructs media server 115 to transmit the selected program to UPE 120. When the selected program is stored locally, such as in UPE 120 or in a storage device directly connected to UPE 120, UPE 120 can retrieve the selected program from local storage.

A channel-surfing feature can be provided. Because simulated broadcast services offer a large amount of content, user-profile data may be used to select multiple programs associated with user-profile data that a user is likely to find desirable. For example, sports programs or cooking programs are identified, because the programs coincide with the user's hobbies. An identifier, such as the selected program name, for each selected program is stored in, for example, a list or table, and when the selected programs are available (e.g., from video archive 105 and/or from live video feeds 110) the selected programs are transmitted to UPE 120.

When the selected programs are available, media server 115 can transmit a plurality of the selected programs to UPE 120 or transmit each selected program one at a time. For example, the first selected program on the list is transmitted to UPE 120. If a user wishes to change the program, the user may press a button on an input device, such as a remote control, and UPE 120 sends a signal to media server 115 that instructs media server 115 to transmit the next program on the list to UPE 120. A different signal may cause media server 115 to return to a previously displayed selection. This would simulate changing channels using a traditional television set receiving broadcast signals.

Scrolling through the selected programs on the list can be automated, so that UPE 120 consecutively displays each received program for a predetermined period of time or until a user selects a displayed program. For example, for providing scrolling through the list of selected programs with minimal latency, the program displayed and the next program(s) on the list may all be transmitted to UPE 120. This can continue until a user selects a displayed program, for example, with an input device connected to UPE 120 or simply by ceasing to request the next program on the list for a predetermined period of time (ceasing to change programs for a predetermined period of time indicates that the current program is acceptable).

When a user specifically requests multiple programs (e.g., by sending a request to media server 115 identifying the requested programs), media server 115 can transmit the multiple requested programs to UPE 120 using the technique described above (i.e., media server 115 can transmit a plurality of the requested programs to UPE 120 or transmit each selected program one at a time).

Video programs in each window in a single screen of the EPG or video programs that are transmitted to reduce the latency of program selection (e.g., when multiple programs are requested or selected using the automated channel-surfing feature) can be encoded using a bit-rate lower than the bit-rate of a video program displayed outside the EPG. By encoding video programs at a lower bit rate, the quality of those programs may be slightly compromised. However, less bandwidth is required to transmit the lower bit-rate encoded programs. Also, a program encoded at a higher bit rate is transmitted to the user from media server 115 after the user selects the program. Therefore, the quality of the displayed program is not compromised, and the user can view the higher bit rate encoded program after selecting the program.

As an alternative to using lower bit rate encoded video programs, media server 115 can transmit key frames of video programs. Key frames include frames of a video program that allow a user to quickly identify the program. For example, key frames include full audio and frames of the video program that include scene changes. Full audio includes an audio signal for a program that is not compressed beyond the compression normally used for transmitting programs to UPE 120 from media server 115. Alternatively, key frames can include IFRAMES of MPEG encoded video programs.

In other preferred embodiments of the present invention, VCR functions are provided for video programs transmitted to UPE 120. For example, UPE 120 may include memory for storing received digital video programs, and a user can control UPE 120 to fast forward or rewind between frames of stored video programs using a user-input device. Also, media server 115 can receive VCR commands and control the transmission of a program accordingly, such as for streaming video, but without long buffering delays.

The methods shown in Figs. 3 and 4 have been described with reference to providing video programs to users. However, one of ordinary skill in the art would readily recognize that the methods shown in Figs. 3 and 4 are applicable for providing all known types of media (e.g., audio, video, data, and the like) to users. The present invention is also not limited to providing simulated broadcast services via a CATV system. The present invention is applicable for providing broadcast services via any known distribution system including distribution systems providing broadcast services via satellite.

What has been described are the preferred embodiments of the present invention. It will be apparent, however, to those skilled in the art that it is possible to embody the invention in specific forms other than those disclosed in the preferred embodiments described above. This may be done without departing from the spirit of the invention, and the preferred embodiments are merely illustrative and should not be considered restrictive in any way. The scope of the invention is given by the appended claims, rather than the preceding description.

Where technical features mentioned in any claim are followed by reference signs, those reference signs have been included for the sole purpose of increasing the intelligibility of the claims and accordingly, such reference signs do not have any limiting effect on the scope of each element identified by way of example by such reference signs.

## Claims

1. A method of simulating broadcast services over a network including a plurality of physical-layer channels for transmitting information to a plurality of user premises equipment comprising steps of:
allocating one physical-layer channel of said plurality of physical-layer channels for transmitting at least one program;
receiving a program selection;
translating the program selection to at least one program; and
transmitting said at least one program over the network on the allocated physical-layer channel.

2. The method of claim 1, **characterised in that** the step of allocating a physical-layer channel further comprises a step of dynamically allocating said one physical-layer channel after the program selection is received.

3. The method of claim 2, **characterised in that** the step of dynamically allocating a physical-layer channel further comprises a step of dynamically allocating said one physical-layer channel based upon one or more of (1) a number of users requesting a program, (2) locations of users in a distribution plant and (3) channel transmission characteristics.

4. The method of claim 1, further comprising a step of retrieving at least one program from a live broadcast feed.

5. The method of claim 1, further comprising a step of retrieving at least one of the selected programs from an archive.

6. The method of claim 1, **characterised in that** the step of receiving a program selection further comprises steps of:
receiving user-profile data; and
converting the user-profile data into the program selection for the selected programs.

7. The method of claim 6, **characterised in that** the step of transmitting said at least one program further comprises a step of transmitting said at least one program to the user without requiring the user to send a request for the plurality of selected programs.

8. The method of claim 6, **characterised in that** the user-profile data includes one or more of channel providers, program types, personal information related to the user and previously requested programs selected by the user.

9. The method of claim 6, **characterised in that** the program selection includes a selection for a plurality of programs.

10. The method of claim 9, further comprising a step of automatically activating a channel-surfing feature that includes transmitting more than one of the plurality programs to user premises equipment.

11. The method of claim 10, further comprising a step of consecutively displaying the more than one of the plurality programs transmitted to the user premises equipment.

12. The method of claim 1, **characterised in that** the step of receiving a program selection further comprises a step of receiving a request from a user to receive a plurality of programs.

13. The method of claim 12, **characterised in that** the step of transmitting said at least one program further comprises a step of transmitting said plurality of programs to the user without requiring the user to send one request for each program.

14. The method of claim 1, **characterised in that** the said at least one program includes one or more of digital video, digital audio and data.

15. A system for transmitting a plurality of requested programs to a plurality of user premises equipment comprising:
a primary hub connected to a media server, an archive and a live feed;
a distribution system including a plurality of physical-layer channels, the distribution system connecting the primary hub to the plurality of user premises, **characterised in that** the media server is operable to allocate a physical-layer channel for transmitting at least one program to at least one of the plurality of user premises equipment.

16. The system of claim 15, **characterised in that** the media server is operable to dynamically allocate said physical-layer channel based upon one or more of (1) a number of users requesting a program and (2) channel transmission characteristics.

17. The system of claim 15, **characterised in that** the media server is operable to retrieve at least one program from one of the live feed and the archive for transmission on the allocated physical-layer channel.

18. The system of claim 15, **characterised in that** the media server receives a request for at least one program from said at least one user premises equipment and retrieves the at least one program in response to the received request.

19. The system of claim 15, **characterised in that** the media server is operable to store user-profile information and retrieve at least one program related to the user-profile information for transmission on the allocated physical-layer channel.

20. The system of claim 19, **characterised in that** the user-profile information includes one or more of channel providers, program types, personal information related to a user and previously requested programs selected by a user.

21. The system of claim 19, **characterised in that** the media server is operable to select a plurality of programs associated with the stored user-profile information.

22. The system of claim 21, **characterised in that** the media server is operable to transmit more than one of said plurality of programs to one of said plurality of user premises equipment.

23. The system of claim 22, **characterised in that** said more than one of said plurality of programs are consecutively displayed on said one of said plurality of user premises equipment.

24. The system of claim 15, **characterised in that** the at least one program includes one or more of digital video, digital audio and data.

25. The system of claim 15, **characterised in that** the distribution system includes at least one of a cable television distribution plant; DSL; a wireless system.
